# EUROPEAN PATENT APPLICATION

(11) **EP 2 592 406 A1**
(43) Date of publication of application: **15.05.2013**
(21) Application number: 11803338.0
(22) Date of filing: 07.07.2011
(51) Int. Cl.: G01L 3/14, B62M 6/40

(54) **PEDAL FORCE DETECTING DEVICE**

(30) Priority: 09.07.2010 JP 2010156885
(71) Applicant: Panasonic Corporation, Kadoma-shi Osaka 571-8501 (JP)
(72) Inventor: OGATA, Motoki, Osaka 540-6207 (JP)
(74) Representative: Vigand, Philippe
(86) International application number: PCT/JP2011/003892
(87) International publication number: WO 2012/005001

(57) **Abstract**

A pedaling force detecting device is configured to be mounted to an apparatus including a rotation shaft rotatable with a force applied thereto and a bearing for rotatably supporting the rotation shaft. The pedaling force detecting device is configured to detect the force. The pedaling force detecting device includes a stress transmission member fixed to the bearing, a support member, and a strain detector. The stress transmission member includes a deformable section and a contacting section. The deformable section is configured to deform upon receiving a stress in a direction away from the bearing. The strain detector detects the stress applied to the deformable section of the stress transmission member.

## Description

### TECHNICAL FIELD

The present invention relates to a pedaling force detecting device configured to be mounted to, e.g. a bicycle.

### BACKGROUND ART

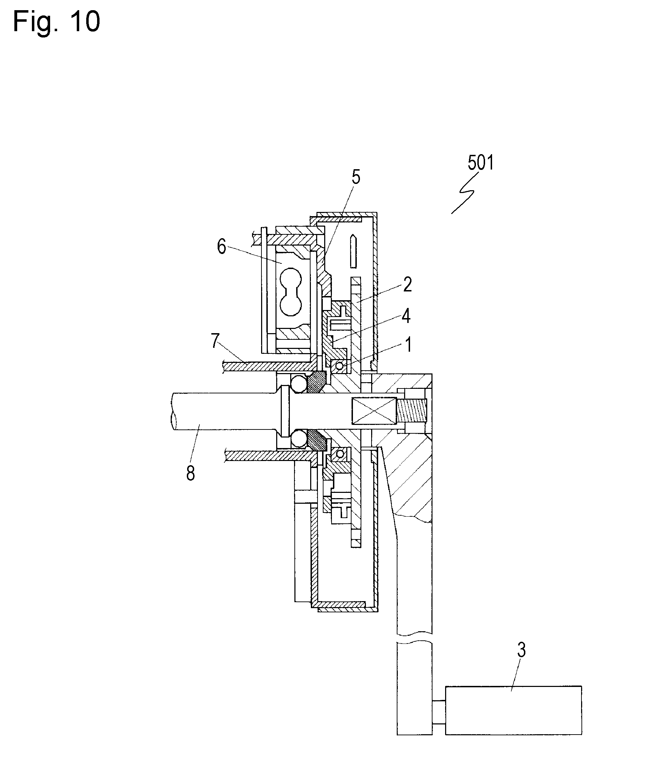

Fig. 10 is a cross-sectional side view of a bicycle having conventional pedaling force detecting device 501 disclosed in Patent Literature 1 mounted around a rotation shaft of a pedal arm. In this bicycle, a driving system by a human power and a driving system by an electric motor are provided in parallel and a driving force from the electric motor is controlled in accordance with a change in the driving force by the human power. Rotation driving body 2 receives a pedaling force in a rotation direction transmitted from pedal 3 of the bicycle and receives an external force in a thrust direction. Stationary body 4 receives an external force that is applied in the thrust direction to rotation driving body 2 and that is transmitted via rolling bearing 1. Retention body 5 is connected to stationary body 4 and elastically deforms by the external force applied to rotation driving body 2 in the thrust direction. One end of stress sensor 6 is fixed to retention body 5 and the other end is attached to bicycle body 7.

An operation of pedaling force detecting device 501 will be described. When a person pedals down pedal 3 of the bicycle, this pedaling operation applies the force in the thrust direction to rotation driving body 2. This force in the thrust direction causes the elastic deformation of retention body 5 via rolling bearing 1 and stationary body 4, thereby slightly moving retention body 5 in the axial direction of pedal shaft 8. This force in the thrust direction biases one end of stress sensor 6. Specifically, stress sensor 6 having the other end fixed to bicycle body 7 strains and detects the pedaling force from pedal 3. It is difficult to provide pedaling force detecting device 501 with a small size.

### CITATION LIST

### Patent Literature

Patent Literature 1: Japanese Patent Laid-Open Publication No.10-153503

### SUMMARY OF THE INVENTION

A pedaling force detecting device is configured to be mounted to an apparatus including a rotation shaft rotatable with a force applied thereto and a bearing for rotatably supporting the rotation shaft. The pedaling force detecting device is configured to detect the force. The pedaling force detecting device includes a stress transmission member fixed to the bearing, a support member, and a strain detector. The stress transmission member includes a deformable section and a contacting section. The deformable section is configured to deform upon receiving a stress in a direction away from the bearing. The strain detector detects the stress applied to the deformable section of the stress transmission member.

This pedaling force detecting device prevents the strain detector from protruding in a radial direction, thus having a small size.

### BRIEF DESCRIPTION OF THE DRAWINGS

Fig. 1 is a cross-sectional side view of a pedaling force detecting device in accordance with Exemplary Embodiment 1 of the present invention.
Fig. 2 is a top view of a strain detector of the pedaling force detecting device in accordance with Embodiment 1.
Fig. 3 is a schematic view of an apparatus having the pedaling force detecting device mounted thereto in accordance with Embodiment 1.
Fig. 4 is a partial enlarged view of the apparatus in accordance with Embodiment 1.
Fig. 5 is a cross-sectional side view of the pedaling force detecting device in accordance with Embodiment 1 for illustrating an operation thereof.
Fig. 6 shows the relation between a frequency and a stress applied to the strain detector of the pedaling force detecting device in accordance with Embodiment 1.
Fig. 7 is a cross-sectional side view of a pedaling force detecting device in accordance with Exemplary Embodiment 2 of the invention.
Fig. 8 is a cross-sectional side view of the pedaling force detecting device in accordance with Embodiment 2 for illustrating an operation thereof.
Fig. 9 is a cross-sectional side view of the pedaling force detecting device in accordance with Embodiment 2 for illustrating an operation thereof.
Fig. 10 is a cross-sectional side view of a bicycle having a conventional pedaling force detecting device mounted thereto.

### DETAIL DESCRIPTION OF PREFERRED EMBODIMENTS

### Exemplary Embodiment 1

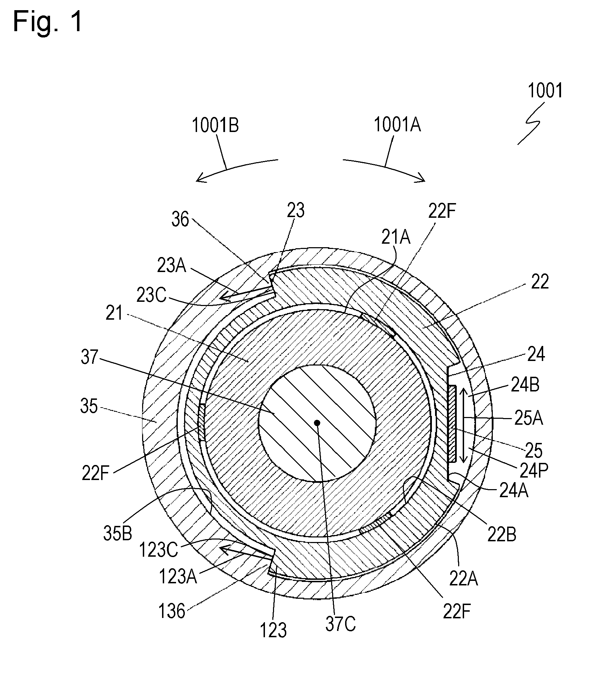

Fig. 1 is a cross-sectional side view of pedaling force detecting device 1001 in accordance with Exemplary Embodiment 1 of the present invention. Rotation shaft 37 rotates about center axis 37C. Bearing 21 supports rotation shaft 37 such that rotation shaft 37 can rotate about center axis 37C. Bearing 21 is installed to an inside of stress transmission member 22. Stress transmission member 22 surrounds the entire periphery of bearing 21 in a radial direction away from center axis 37C. According to Embodiment 1, bearing 21 is a rolling bearing. Three support sections 22F are provided in the inside of stress transmission member 22. Three support sections 22F support bearing 21. Thus, stress transmission member 22 is fixed to bearing 21 by support sections 22F. Stress transmission member 22 has two contacting sections 23 and 123. Contacting sections 23 and 123 have a step shape and are provided in outer circumferential surface 22A. Stress transmission member 22 has straight deformable section 24. Strain detector 25 adheres fixedly to deformable section 24 of stress transmission member 22. Support member 35 has projection sections 36 and 136 that are provided at an outer side of stress transmission member 22 and that protrude inwards. Projection sections 36 and 136 contact contacting sections 23 and 123 of stress transmission member 22, respectively. Surface 23C of contacting section 23 contacting projection section 36 opens in direction 23A along circumferential direction 1001B which extends about center axis 37C, and faces and contacts projection section 36 of support member 35. Surface 123C contacting to projection section 136 of contacting section 123 opens in direction 123A along circumferential direction 1001A about center axis 37C. Circumferential direction 1001A is opposite to circumferential direction 1001B. Surface 123C faces and contacts projection section 136 of support member 35. Outer circumferential surface 21A of bearing 21 faces inner circumferential surface 22B of stress transmission member 22 and is partially fixed to inner circumferential surface 22B with three support sections 22F. Outer circumferential surface 22A of stress transmission member 22 faces inner circumferential surface 35B of support member 35. Projection sections 36 and 136 protrude from inner circumferential surface 35B.

In deformable section 24, recess 24B is provided in outer circumferential surface 22A of stress transmission member 22. Recess 24B has bottom surface 24A. Bottom surface 24A is a flat outer surface. Recess 24B constitutes space 24P. Bottom surface 24A of deformable section 24 of stress transmission member 22 faces inner circumferential surface 35B of support member 35 across space 24P.

Stress transmission member 22 surrounds bearing 21. Outer circumferential surface 21A of bearing 21 faces inner circumferential surface 22B of stress transmission member 22. Support member 35 surrounds stress transmission member 22. Outer circumferential surface 22A of stress transmission member 22 faces inner circumferential surface 35B of support member 35.

According to Embodiment 1, support member 35 is made of metal, such as cold-rolled stainless steel (austenite, e.g., JIS standard SUS304). Stress transmission member 22 is made of metal, such as cold-rolled stainless steel (austenite, e.g., JIS standard SUS304). Deformable section 24 is made of cold-rolled stainless steel (austenite, e.g., JIS standard SUS304). Support section 22A is made of metal, such as cold-rolled stainless steel (austenite, e.g., JIS standard SUS304). According to Embodiment 1, stress transmission member 22 is made of uniform material including deformable section 24. Support section 22F may be made of the same material as that of stress transmission member 22 and may be formed unitarily with stress transmission member 22.

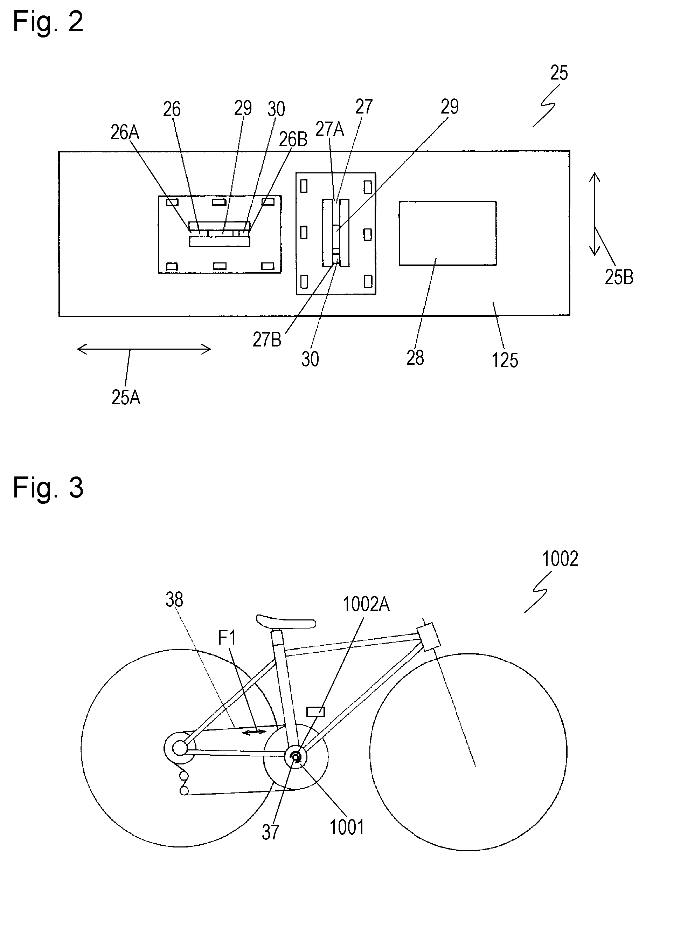

Fig. 2 is a top view of strain detector 25. Strain detector 25 includes: base 125 extending in a longitudinal direction of direction 25A, vibrators 26 and 27 fixed to base 125, and integrated circuit (IC) 28 that drives vibrators 26 and 27 to vibrate and that processes signals output from vibrators 26 and 27. Vibrator 26 has a double-supported beam shape that extends in direction 25A and that has ends 26A and 26B opposite to each other. Specifically, vibrator 26 has ends 26A and 26B opposite to each other in direction 25A. Ends 26A and 26B are fixed to base 125. Vibrator 27 has a double-supported beam shape that extends in direction 25B perpendicular to direction 25A and that has ends 27A and 27B opposite to each other. Specifically, vibrator 27 has ends 27A and 27B opposite to each other in direction 25B. Ends 27A and 27B are fixed to base 125. Strain detector 25 further includes driving section 29 and sensing section 30 that are provided on vibrators 26 and 27, respectively. Driving section 29 and sensing section 30 include lower electrode layers provided on vibrators 26 and 27, piezoelectric body layers provided on the lower electrode layers, and upper electrode layers provided on the piezoelectric body layers, respectively. The lower electrode layers are made of Pt. The piezoelectric body layers are made of piezoelectric material, such as PZT. The upper electrode layers are made of Au. Driving section 29, sensing section 30, and IC 28 of vibrators 26 and 27 are electrically connected with wiring patterns made of Au.

Strain detector 25 is fixed to deformable section 24 of stress transmission member 22 such that direction 25A is parallel to circumferential directions 1001A and 1001B, i.e., is, perpendicular to the radial direction from center axis 37C so as to allow vibrators 26 and 27 to vibrate. Specifically, strain detector 25 is fixed to bottom surface 24A of recess 24B.

A method of manufacturing pedaling force detecting device 1001 will be described below.

First, a semiconductor substrate made of Si is etched to form base 125 and vibrators 26 and 27. Next, wiring patterns made of Au are vapor-deposited on an upper surface of the semiconductor substrate. After that, Pt is vapor-deposited on positions of vibrators 26 and 27 at which driving section 29 and sensing section 30 are to be provided, thereby forming the lower electrode layers. Next, PZT is vapor-deposited on the upper surface of the lower electrode layer to form the piezoelectric body layers. Then, Au is vapor-deposited to form the upper electrode layers. The upper surfaces of vibrators 26 and 27 have driving section 29 and sensing section 30 thereon, respectively. Next, IC 28 is placed on base 125 and electrically connected to driving section 29 and sensing section 30 of vibrators 26 and 27, respectively, thereby providing strain detector 25.

Next, strain detector 25 is adhered and fixed to deformable section 24 of stress transmission member 22. After that, the inner side of stress transmission member 22 is engaged with bearing 21 such that support section 22F of stress transmission member 22 contacts outer circumferential surface 21A of bearing 21.

Finally, stress transmission member 22 is accommodated in the inner side of support member 35 such that contacting sections 23 and 123 of stress transmission member 22 contact projection sections 36 and 136 of support member 35, respectively.

An operation of pedaling force detecting device 1001 will be described below.

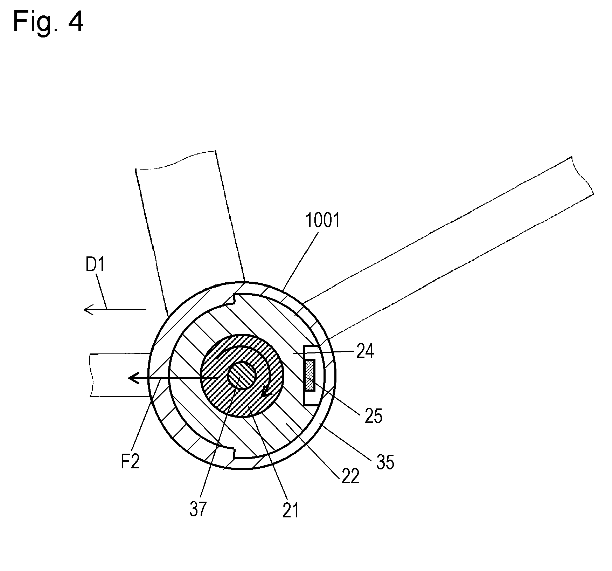

Figs. 3 and 4 are a schematic view and a partial expanded view of apparatus 1002 having pedaling force detecting device 1001 mounted thereto, respectively. Apparatus 1002 according to Embodiment 1 is a bicycle. When a driver treads down pedal 1002A, a pedaling force is applied to pedal 1002A and rotate rotation shaft 37. IC 28 applies, to driving section 29 of vibrator 26, an alternating-current (AC) voltage having a frequency substantially identical to the natural frequency fa0 of vibrator 26 and applies, to driving section 29 of vibrator 27, an AC voltage having a frequency substantially identical to the natural frequency fb0 of vibrator 27. The AC voltages cause a string vibration of vibrator 26 at the natural frequency fa0 and a string vibration of vibrator 27 at the natural frequency fb0. While vibrating, IC 28 processes an output signal from sensing section 30 of vibrator 26 to detect frequency fa, and processes an output signal from sensing section 30 of second vibrator 27 to detect frequency fb.

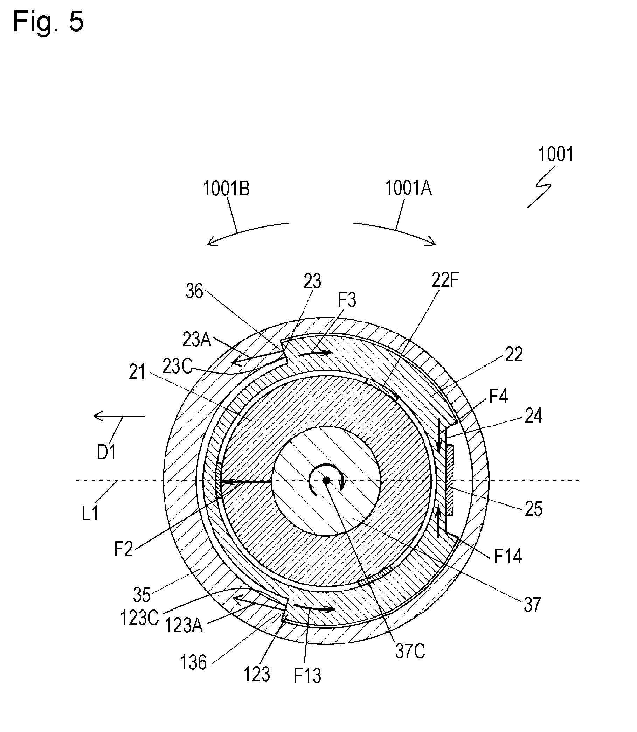

Fig. 5 is a cross-sectional side view of pedaling force detecting device 1001 according to Embodiment 1 for illustrating an operation of the device. When the driver treads down pedal 1002A (see Fig. 3), rotation shaft 37 is rotated as shown in Fig.4 while chain 38 is having tension F1. This rotation generates stress F2 from rotation shaft 37 to bearing 21 in direction D1 from bearing 21 to the rear wheel. Direction D1 is a radial direction from bearing 21 and away from bearing 21. As shown in Fig. 5, stress F2 acts on stress transmission member 22 from bearing 21 via support section 22F to urge stress transmission member 22 in direction D1 toward the rear wheel. As a result, reaction forces F3 and F13 in circumferential directions 1001A and 1001B are generated from projection sections 36 and 136 of support member 35 to contacting sections 23 and 123 of stress transmission member 22, respectively. Reaction forces F3 and F13 are transmitted to deformable section 24 of stress transmission member 22. Then, compression stresses F4 and F14 act on deformable section 24 in circumferential directions 1001A and 1001B, thereby compressing strain detector 25 in direction 25A. Contacting sections 23 and 123 are symmetrical with respect to straight line L1 extending through center axis 37C in direction D1. Similarly, projection sections 36 and 136 are symmetrical to each other with respect to straight line L1. Similarly, directions 23A and 123A are symmetrical to each other with respect to straight line L1.

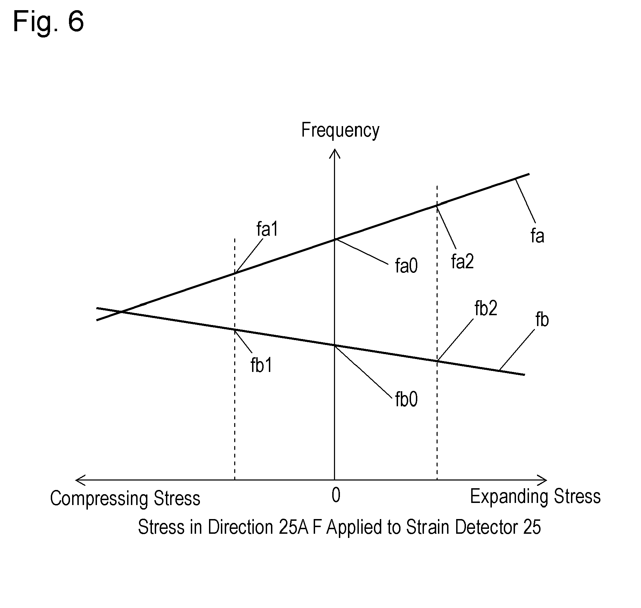

Fig. 6 illustrates the relation between the stress applied to strain detector 25 and the frequencies of vibrators 26 and 27. In Fig. 6, the vertical axis represents the frequencies of vibrators 26 and 27, and the horizontal axis represents the stress applied to strain detector 25 in direction 25A. Along the horizontal axis of Fig. 6, the right side of the stress of "0" shows an expanding stress for expanding strain detector 25 in direction 25A while the left side of the stress of "0" shows a compressing stress for compressing strain detector 25 in direction 25A. When the stress applied to strain detector 25 in direction 25A is "0", vibrators 26 and 27 vibrate at natural frequencies fa0 and fb0, respectively. Vibrators 26 and 27 vibrate at frequencies higher than frequencies fa and fb when vibrators 26 and 27 are urges by the stress so as to expand the beam shapes of vibrators 26 and 27 while vibrators 26 and 27 vibrate at lower frequencies when vibrators 26 and 27 are urged by the stress so as to compress the beam shapes. When strain detector 25 having a combination of vibrators 26 and 27 receives a compression stress in direction 25A, vibrator 26 extending in direction 25A is compressed and vibrator 27 extending in direction 25B (Fig. 2) is expanded. Thus, as shown in Fig. 6, frequency fa of vibrator 26 decreases from natural frequency fa0 to frequency fa1. Frequency fb of vibrator 27 increases from natural frequency fb0 to frequency fb1. Stress F2 and reaction forces F3 and F13 change depending on the pedaling force caused when the driver treads pedal 1002A, thus changing the compression stress for compressing train detector 25. This change of the stress changes frequencies fa and fb of vibrators 26 and 27. IC 28 processes signals output from sensing sections 30 of vibrators 26 and 27 depending on the vibration of vibrators 26 and 27, and detects, based on the changes of frequencies fa and fb, the pedaling force caused when the driver treads down pedal 1002A.

In conventional pedaling force detecting device 501 shown in Fig. 10, rolling bearing 1 is surrounded by stationary body 4, retention body 5, and stress sensor 6 that protrude in radial directions, thus preventing pedaling force detecting device 501 from having a small size.

In pedaling force detecting device 1001 shown in Figs. 1 to 6, bearing 21 is surrounded by support member 35 having inner circumferential surface 35B such that stress transmission member 22 and strain detector 25 are accommodated in the inner side of inner circumferential surface 35B, thus allowing pedaling force detecting device 1001 to have a small size.

Pedaling force detecting device 1001 is configured such that bearing 21 is fixed to inner circumferential surface 22B, and strain detector 25 is provided in deformable section 24 of stress transmission member 22 provided in the radial direction of bearing 21. This configuration prevents strain detector 25 from protruding in the radial direction, thus allowing pedaling force detecting device 1001 to have a small size.

### Exemplary Embodiment 2

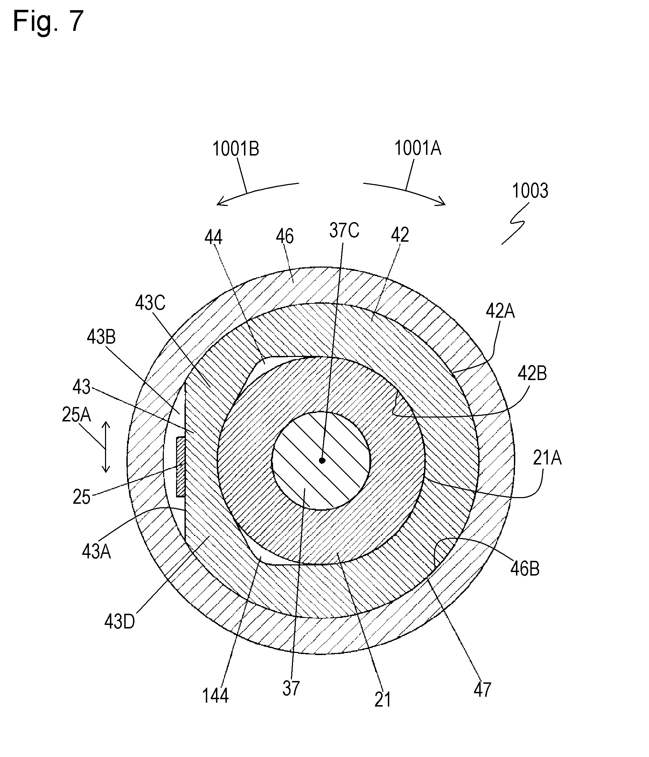

Fig. 7 is a cross-sectional side view of pedaling force detecting device 1003 in accordance with Exemplary Embodiment 2 of the present invention. In Fig. 7, components identical to those of pedaling force detecting device 1001 according to Embodiment 1 shown in Figs. 1 to 6 are denoted by the same reference numerals. Pedaling force detecting device 1003 shown in Fig. 7 includes support member 46 and stress transmission member 42 instead of support member 35 and stress transmission member 22 of pedaling force detecting device 1001 according to Embodiment 1 shown in Figs. 1 to 6.

Bearing 21 is fixed at the inner side of stress transmission member 42 having a cylindrical shape. Specifically, outer circumferential surface 21A of bearing 21 is fixed at inner circumferential surface 42B of stress transmission member 42 having a cylindrical shape. Stress transmission member 42 is provided entirely in radial directions of outer circumferential surface 21A of bearing 21. Deformable section 43 having outer surface 43A is provided at outer circumferential surface 42A of stress transmission member 42 having a cylindrical shape. Outer surface 43A faces inner circumferential surface 46B of support member 46 across space 43B. Both ends 43C and 43D of deformable section 43 have gaps 44 and 144, respectively. Gaps 44 and 144 are provided between inner circumferential surface 42B of stress transmission member 42 and outer circumferential surface 21A of bearing 21. Strain detector 25 is fixedly adhered to outer surface 43A of deformable section 43 of stress transmission member 42 so that direction 25A is parallel to circumferential directions 1001A and 1001B to detect the stress applied to deformable section 43. Inner circumferential surface 46B of support member 46 having a hollow shape contacts outer circumferential surface 42A of stress transmission member 42 to support stress transmission member 42. Stress transmission member 42 including deformable section 43 may be made of the same material as stress transmission member 22 including deformable section 24 of pedaling force detecting device 1001 according to Embodiment 1.

An operation of pedaling force detecting device 1003 will be described below. Pedaling force detecting device 1003 is mounted into apparatus 1002 shown in Fig. 3 instead of into pedaling force detecting device 1001 of Embodiment 1.

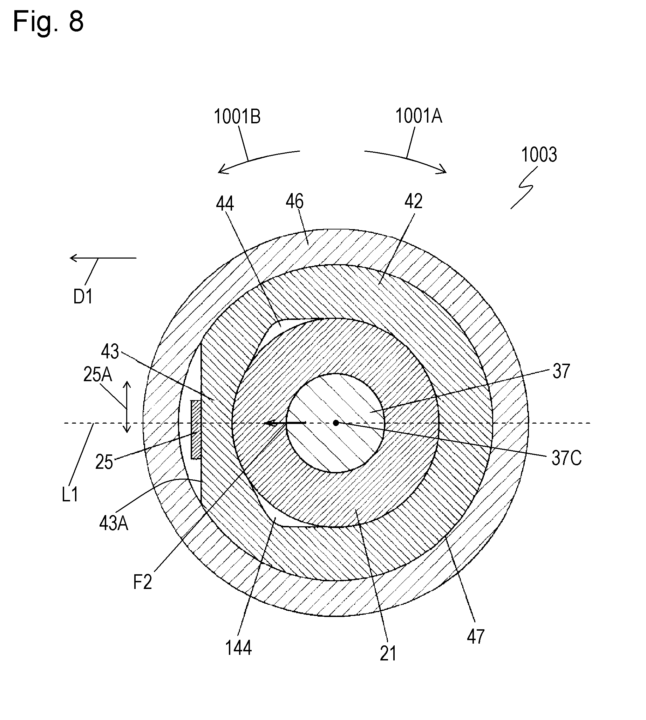

Fig. 8 is a cross-sectional side view of pedaling force detecting device 1003 for illustrating an operation of the device. When the driver treads down pedal 1002A, rotation shaft 37 rotates as shown in Fig.4 while chain 38 has tension F1 (see Fig. 3). This rotation generates, as shown in Fig. 8, stress F2 from rotation shaft 37 to bearing 21 in direction D1 to move bearing 21 toward the rear wheel, thereby urging stress transmission member 42 in direction D1 toward the rear wheel. In stress transmission member 42, outer surface 43A of deformable section 43 faces inner circumferential surface 46B of support member 46 across space 43B. Thus, stress F2 is transmitted by bearing 21 to deformable section 43 in direction D1 to apply a bending stress to deformable section 43. As a result, outer surface 43A is expanded in along circumferential directions 1001A and 1001B while strain detector 25 is also expanded in direction 25A. This expansion increases frequency fa of vibrator 26 shown in Fig. 6 from natural frequency fa0 to frequency fa2, and decreases frequency fb of vibrator 27 from natural frequency fb0 to frequency fb2. Based on the detection of frequencies fa2 and fb2, IC 28 can detect the pedaling force applied to pedal 1002A of the bicycle similarly to pedaling force detecting device 1001 according to Embodiment 1.

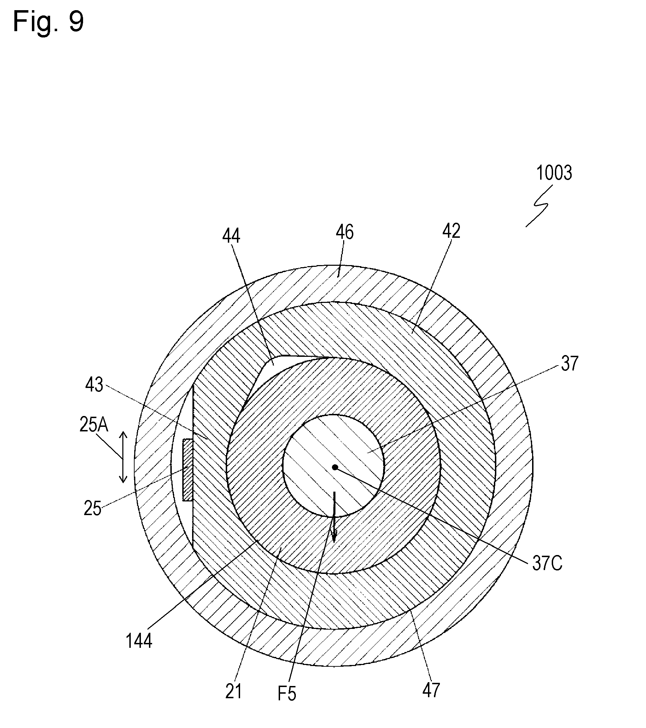

Even when a force other than the pedaling force applied to pedal 1002A is applied to rotation shaft 37, pedaling force detecting device 1003 can detect the pedaling force without an influence of the other force. Fig. 9 is a cross-sectional side view of pedaling force detecting device 1003 for illustrating an operation of the device. As shown in Fig. 9, when an external force other than the pedaling force for treading pedal 1002A is applied to rotation shaft 37, bearing 21 may receive stress F5 in a downward direction perpendicular to direction D1 of stress F2. In this case, pedaling force detecting device 1003 is configured such that gap 144 provided at the lower side of deformable section 43 is narrowed or eliminated to absorb the downward travel of bearing 21, thereby preventing deformable section 43 from deforming. Therefore, strain detector 25 provided in deformable section 43 does not detect a signal based on stress F5 output from vibrators 26 and 27, resulting in no detection of the external force other than the pedaling force on the pedal. Similarly, when bearing 21 receives stress F2 applied during a normal use as well as an orthogonal stress in an upper direction, gap 44 provided at the upper side of deformable section 43 is narrowed or eliminated to absorb the upward travel of bearing 21, thereby preventing deformable section 43 from deforming. This results in no detection by strain detector 25 of the external force other than the pedaling force on the pedal. Thus, pedaling force detecting device 1003 can accurately detect stress F2 which is to be detected without an influence of stress F5 even when bearing 21 receives stress F5 in a direction perpendicular to stress F2. As described above, both ends 43C and 43D of deformable section 43 have gaps 44 and 144 provided between stress transmission member 22 and bearing 21. Gaps 44 and 144 absorb stressF5 not directly applied to deformable section 43 among the stresses applied from bearing 21 to stress transmission member 22.

### INDUSTRIAL APPLICABILITY

A pedaling force detecting device according to the present invention can have a small size and is useful as a pedaling force detecting device used in a bicycle having an electric motor.

### REFERENCE MARKS IN THE DRAWINGS

- 21: Bearing
- 22, 42: Stress Transmission Member
- 23, 123: Contacting Section
- 24, 43: Deformable Section
- 25: Strain Detector
- 35, 46: Support Member
- 36, 136: Projection Section
- 37: Rotation Shaft
- 44, 114: Gap
- 1001, 1003: Pedaling Force Detecting Device
- 1002: Apparatus

## Claims

1. A pedaling force detecting device configured to be mounted to an apparatus including a rotation shaft rotatable with a force applied thereto and a bearing for rotatably supporting the rotation shaft, the pedaling force detecting device being configured to detect the force, the pedaling force detecting device comprising:
a stress transmission member fixed to the bearing, the stress transmission member including a deformable section and a contacting section, the deformable section being configured to deform upon receiving a stress in a direction away from the bearing;
a support member including a projection section contacting the contacting section of the stress transmission member; and
a strain detector for detecting the stress applied to the deformable section of the stress transmission member.

2. The pedaling force detecting device according to claim 1,
wherein the strain detector is provided on an outer surface of the deformable section, and
wherein the outer surface of the deformable section faces an inner circumferential surface of the support member across a space.

3. A pedaling force detecting device configured to be mounted to an apparatus including a rotation shaft rotatable with a force applied thereto and a bearing for rotatably supporting the rotation shaft, the pedaling force detecting device being configured to detect the force, the pedaling force detecting device comprising:
a stress transmission member fixed to an outer circumferential surface of the bearing, the stress transmission member including a deformable section configured to deform upon receiving a stress in a direction away from the bearing;
a support member for supporting an outer circumferential of the stress transmission member; and
a strain detector for detecting the stress applied to the deformable section of the stress transmission member.

4. The pedaling force detecting device according to claim 3,
wherein a pair of gaps are provided between the stress transmission member and the bearing at both ends of the deformable section, and
wherein the pair of gaps are configured to absorb a stress which is not applied directly to the deformable section out of stresses applied from the bearing to the stress transmission member.

5. The pedaling force detecting device according to claim 3,
wherein the strain detector is provided on an outer surface of the deformable section, and
wherein the outer surface of the deformable section faces an inner circumferential surface of the support member across a space.
